# EUROPEAN PATENT SPECIFICATION

(11) **EP 2 966 930 B1**
(45) Date of publication and mention of the grant of the patent: **29.09.2021**
(21) Application number: 14290199.0
(22) Date of filing: 09.07.2014
(51) Int. Cl.: H04W 84/18

(54) **Mesh network**
Mesh-Netzwerk
Réseau maillé

(43) Date of publication of application: 13.01.2016
(73) Proprietor: Bull SAS, 78340 Les Clayes-sous-Bois (FR)
(72) Inventor: PEGUET, Steve, 94600 Choisy-le-Roi (FR); ATTIMONT, Luc, 92400 Courbevoie (FR)
(74) Representative: IPAZ

(56) References cited:
- US-A1- 2005 190 717
- US-A1- 2008 008 137
- US-A1- 2012 221 720
- US-A1- 2013 058 352
- KIM S ET AL: "Design and theoretical analysis of throughput enhanced spatial reuse distributed coordination function for IEEE 802.11", IET COMMUNICATIONS,, vol. 3, no. 12, 7 December 2009 (2009-12-07), pages 1934-1947, XP006034301, ISSN: 1751-8636, DOI: 10.1049/IET-COM:20080498
- None

## Description

Present invention concerns a mesh network. More specifically, present invention concerns improved setup and control of a node in a mesh network.

A mesh network comprises a plurality of nodes. The nodes are adapted for wireless communication and each node has a physical range in which another node must lie so that the first node may communicate wirelessly with it. The physical range may be determined by distance alone, additional influences may comprise objects between the first and second nodes, power allocated to a communication unit or other parameters. The mesh network is self organising in that the single nodes exchange information so that every node has knowledge at least about a local section of the mesh network. A message can be delivered from any first node to any second node in the network by passing the message over a series of nodes wherein each forwarding node is reachable from the previous and the next node. This way, any node inside the network can communicate with any other node in the network. Such a network is also known as an ad hoc network and may for instance be set up between mobile phones, mobile computers or cell phones.

One of the nodes may also be connected to another network like the Internet and be adapted to forward information between the two networks. That way, all the nodes in the first network may be able to access the node on the other network by means of routing messages over said node.

For setting up a mesh network, each node must determine a set of proximate nodes, that is, nodes that may be communicated with directly. Additional information about the proximate node may also be required, such as a physical location, a distance, an available bandwidth or a set of nodes proximate to that node. This may help to determine over which proximate node a message should be delivered towards a destination.

For establishing and maintaining the set of proximate nodes, control messages are usually exchanged between the nodes. Some of the nodes may be mobile and the set of proximate nodes may change frequently so that the control messages must be exchanged frequently to keep the mesh network organised. This may require considerable energy for the wireless interface of a node, which may reduce battery lifetime of a mobile node.

US 2008/008137 A1 proposes to devide a number of mobile nodes into distinct groups according to the direction of movement of the individual node.

### SUMMARY of INVENTION

It is an object of present invention to provide a method, a computer program product, a node and a mesh network that support improved discovery of proximate nodes. The invention solves the given object by a method, a computer program product, a node and a mesh network with the features of the independent claims. Dependent claims give preferred embodiments.

A method for controlling a first node in a mesh network comprises steps of establishing, by the first node, a set of proximate nodes in the mesh network, wherein between the first node and a proximate node direct communication is possible, and collecting, by the first node, movement information of one of said nodes. In this, establishing the set is done on the basis of said movement information. The movement information may comprise a "I am moving" and/or "I am motionless" message.

When a node moves, the set of proximate nodes is more likely to change than when it stands still. The exchange of information that is required for establishing the set of proximate nodes may be done in a less intensive way when no movement occurs so that less energy may be required, especially for sending and receiving information wirelessly. The saved energy may contribute to longer battery lifetime or improved performance, especially when the first node is comprised by a mobile device.

In one variant, the movement information concerns the first node. It may be easy for the first node to determine if it is moving, for instance by making use of a corresponding sensor or signal. When the first node is moving, the likelihood that one or more proximate nodes will be removed from the set or will be newly accepted to the set is high. If the first node is standing still, the probability of a proximate node going in a state where direct communication with the first node is impossible - that is, a previously proximate node getting non-proximate - is only half as high than when the first node is moving.

In another variant that may be combined with the above-described variant, the movement information concerns one of the proximate nodes in the set. When it is determined by the first node, that one of the nodes in the set is moving, special effort may be invested to determine if the proximate node remains in the set or not. Movement of the proximate node may also imply that routing parameters for delivering messages in the mesh network are changed, for instance because the proximate node's set of proximate nodes changes. The change of routing information may also be accounted for by the first node.

If the movement information corresponds to a lack of movement, establishing the set of proximate nodes may be done less frequently. Establishing the set of proximate nodes may comprise periodically emitting a beacon or information frame, emitting a neighbour discovery request and listening for responses from proximate nodes, acknowledging a corresponding a discovery request from a proximate node or more complex routing or topology discovery requests. By reducing the frequency with which the set of proximate nodes is established, energy for wireless transmitting and receiving may be saved. Changes in the mesh network that affect the first node or one of its proximate nodes may still be propagated quickly as the set of proximate nodes is established more often if the movement information corresponds to a movement of one of the nodes.

In another embodiment, the movement information concerning the first node may be broadcast for reception by proximate nodes. This may require a change of the protocol that is used for communication between the first node and its proximate nodes. Proximate nodes that are aware of the improved protocol may make use of the movement information as described above. Other nodes may simply ignore the additional information.

According to another embodiment, the movement information is transmitted when the movement status changes. In other words, the new movement status may be transmitted every time the node starts or stops. This may help propagating the new movement status of the first node when the information is most relevant.

It is preferred that the first node is adapted to forward a message between nodes that are proximate to it. This way, the mesh network may support communication between nodes by means of one or a series of relaying nodes.

According to another aspect, a computer program product comprises code means for carrying out the method described above when the computer program product is run on a control unit or stored on a computer readable medium.

According to yet another aspect, a node for participating in a mesh network comprises communication means for directly communicating with proximate nodes and a control unit that is adapted to carry out the method described above. Such a node may especially be comprised by a mobile unit such as a smartphone, a personal communication device, a mobile computer or a node that is installed on board of a motor vehicle. The node may also be immobile, in which case evaluation of received movement information may still help updating routing information faster.

In one embodiment the node is adapted to be installed aboard a vehicle and the node further comprises an interface for receiving a movement signal concerning the vehicle. The movement signal may for instance comprise a position signal of a navigation system such as a GPS receiver. The signal may also comprise a speed signal of the vehicle. According to yet another embodiment, the signal may simply indicate that an engine for propelling the motor vehicle is on, in which case movement of the vehicle may be assumed with a certain probability.

In another embodiment, the node may comprise a motion sensor. The motion sensor may for instance comprise an inertial sensor or an acceleration sensor. Such a sensor may be advantageously implemented in micromechanics and integrated into the node.

According to one more another aspect, a mesh network comprises at least one node as described above. It is preferred that the mesh network comprises two or even more such nodes, while an arbitrary number of nodes according to the state of the art may also be comprised.

The invention will now be described in more detail making reference to the enclosed Figures, in which:
- Fig. 1: shows a mesh network;
- Fig. 2: shows a node for the mesh network of Fig. 1 and
- Fig. 3: shows a flow chart of a method to be carried out on the node of Fig. 2.

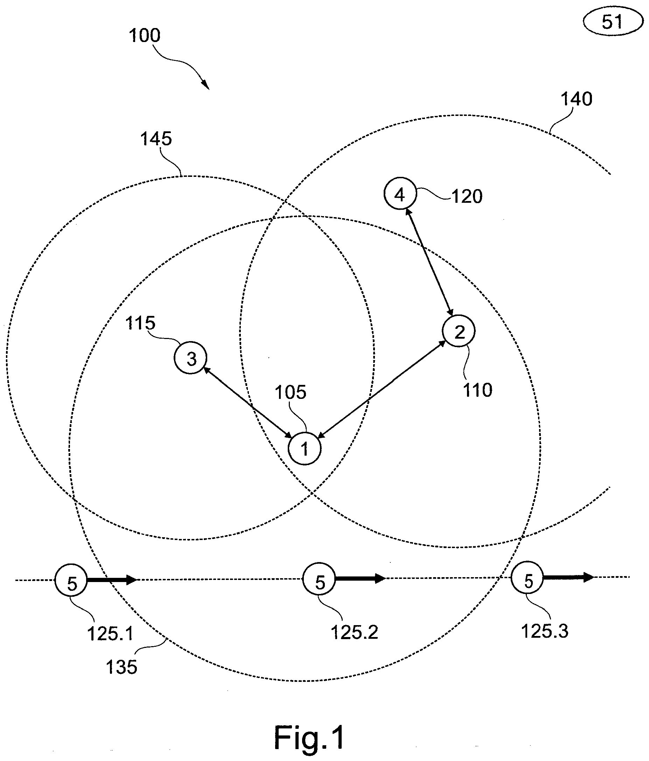

Fig. 1 shows a mesh network 100. The mesh network 100 requires at least two nodes to work; however, by way of a non limiting example, a first node 105, a second node 110, a third node 115, a fourth node 120 and a fifth node 125 are given in the given exemplary embodiment.

The fifth node 125 travels along an example trajectory 130. The fifth node 125 is illustrated as 125.1 at a first point in time, 125.2 at a second point in time and 125.3 at a third point in time.

Each node 105 - 125 is associated a set of proximate nodes that contains such nodes 105 - 125 that can be communicated with directly. It is preferred that communication between the nodes 105 - 125 is done wirelessly. Whether or not a node 105 - 125 is proximate to any other node 105 - 125 is therefore dependent on a number of factors, one of which is related to the physical distance between the nodes 105 - 125. Other factors such as an object in the area of the two nodes 105 - 125, the shape and size of an antenna used for wireless communication, an amount of energy available for operating the wireless subsystem or other factors may apply.

In the given example, a first set 135 comprises nodes 105 - 125 that are proximate to the first node 105. The first set 135 comprises nodes 110, 115 and 125.2, that is, the node 125 is only in the first set 135 at the second point in time. In the following it will be assumed that the second point in time is present and the fifth node 125.2 is part of the set 135.

A second set 140 comprises nodes 105-125 that are proximate to the second node 110, in the displayed example the first node 105 and the fourth node 120. A third set 145 comprises nodes 105-125 proximate to the third node 115, which is only the first node 105 in present example.

As has been mentioned before, direct communication between two nodes 105 - 125 requires them to be close enough for passing wireless signals between them. Although it is possible that a first node 105 is proximate to a second node 110 in this sense while the opposite is not true, it is assumed in present context that proximity is generally a mutual property.

By way of example, the first node 105 may directly communicate with the second node 110, the third node 115 or the fifth node 125.2. If a message is to be passed from the first node 105 to the fourth node 120, the message must be relayed over the second node 110. Relaying it over the third node 115 is not possible as the third node 115 has no way of passing the message received from the first node 105 further up to the fourth node 120.

The possibility of passing a message from the fifth node 125 to any of the other nodes 105 - 120 or vice versa is dependent on the position of the fifth node 125 and therefore on time. The fifth node 125.2 may exchange a message with the first node 105 only at the second point in time, thereby potentially establishing connectivity between the fifth node 125.2 and any of the other nodes 105 - 120. Note that the fifth node 125 may be proximate to another node 105 - 125, possibly independent of its movement.

It can be seen that in a mesh network 100 in which at least one of the nodes 105 - 125 may be moving, the mesh network 100 will have to be reconfigured frequently to account for changing message routes. The more the nodes 105 - 125 are moving, the more reconfiguration may be necessary.

It is therefore proposed to make a discovery, in which a set 135 - 145 of proximate nodes 105 - 125 is established, takes into consideration a movement information concerning any of the nodes 105 - 125. For instance, if the first node 105 determines the set 135 of nodes 105 - 125 that are proximate to it, it may be aware that the fifth node 125 is moving and thus be prone to leave the first set 135 soon. Routing to a node 105 - 125 that is not proximate should therefore better not be routed over the fifth node 125.

On the other hand, should the first node 105 know that for instance the third node 115 is not moving, chances that the third node 115 will be removed from the first set 135 are small, especially if the first node 105 itself is not moving either. The third node 115 may therefore used for relaying or routing messages.

It is furthermore proposed to carry out the establishing process of the first set 135 for the first node 105 such that energy and/or effort is conserved when movement information does not indicate a movement of the first node 105 and/or any of the proximate nodes 110, 115 or 125. Establishing the first set 135 may be done more thorough or more frequently when said movement information hints at a movement of the first node 105 and/or one of the proximate nodes 110, 115 and 125.

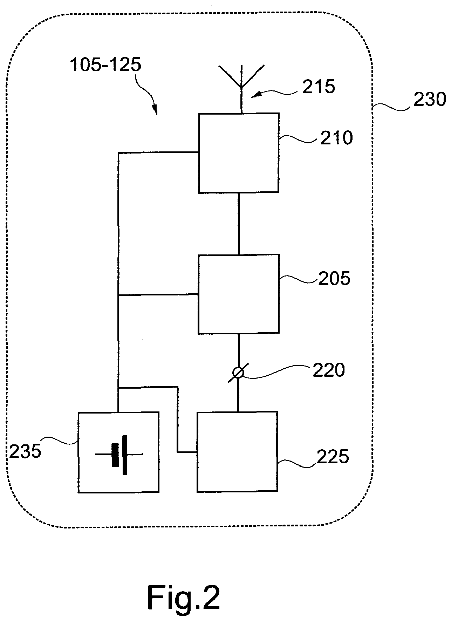

Fig. 2 shows a node 105 - 125 for the mesh network 100 of Fig. 1. The node 105 - 125 comprises a control unit 205 that is adapted for carrying out discovery of proximate nodes 105 - 125 and message transmission/reception, as well as a wireless communication means 210 which is preferred to also comprise an antenna 215. In one preferred embodiment the control unit 205 is connected to an interface 220 for receiving a movement signal. A sensor 225 connected to the interface 220 may for instance comprise an acceleration sensor, a movement sensor, a position sensor or any other sensor that provides a signal on the basis of which movement of the node 105 - 125 may be determined.

In one embodiment, the node 105 - 125 is comprised by a superordinate structure 230 like a device or vehicle. In this case the sensor 225 may be part of the structure 230 rather than of the node 105 - 125.

Should for instance the structure 230 comprise a motor vehicle like a car, boat, train or truck, the sensor 225 may provide a speed signal representing a moving speed of the vehicle 230. It may alternatively provide an RPM signal of a combustion engine for propelling the vehicle 230 wherein the RPM signal, possibly in combination with information on a selected gear in a gearbox, may be indicative of a vehicle 230 speed.

In another embodiment, the sensor 225 may provide a logical signal on the basis of which the binary information of a movement or lack of movement of the structure 230 can be determined with a predetermined probability. The signal may for instance represent a running state of the engine. Reasoning that the vehicle 230 will generally be moving or be about to move when the engine is on, the engine signal may be taken for a movement signal on the interface 220.

A battery 235 for powering the node 105 - 125 may be part of the node 105 - 125 or part of the structure 230. Keeping a current of electrical energy from the battery 235 low may be important, especially if the structure 230 is self contained like a personal device or an embedded system. The device 230 may for instance be carried by a soldier and communication over the mesh network 100 may be critical. In a civilian application the personal device 230 may be carried for instance by a general internet user and battery life may still be an issue.

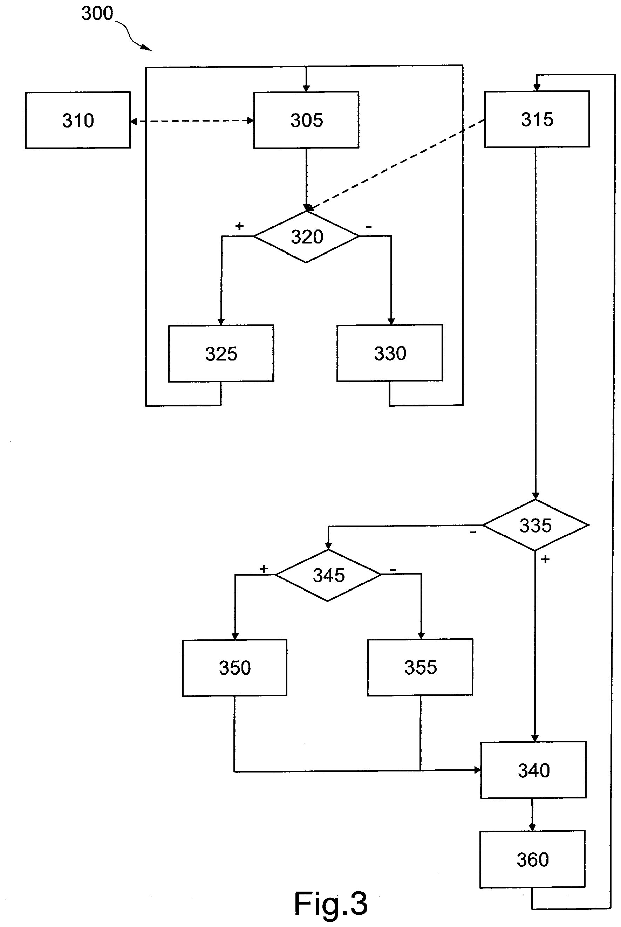

Fig. 3 shows a flow chart of a method 300, the method 300 being especially adapted to be carried out on the control unit 205 of the node 105 - 125 of Fig. 2. In the following, method 300 is described as running on the first node 105 in Fig. 1.

In a first step 305, the wireless communication means 210 is controlled to provide information on nodes 110 - 125 that can be communicated with directly, that is, from node 105 - 125 to node 105 - 125 instead of over one or more other nodes 105 - 125. In one embodiment, gathering such information may comprise a scan of the environment, that is, passively listening for wireless signals from other nodes 110 - 125. In another embodiment, discovery of the nodes 110 - 125 may be actively requested, that is, a request for response may be broadcast out to any node 105 - 125 that can receive it. Responses from other nodes 110 - 125 may be received and evaluated accordingly. In another embodiment, step 305 may also comprise time controlled emission of a beacon signal. A beacon signal generally does not oblige a receiving node 105 - 125 to respond. Said signal may comprise information on the first node 105 that may help adjusting communication parameters for improved communication.

Step 305 may yield moving information on proximate nodes 205 - 225. On the basis of the information gathered in step 305, the first set 135 of proximate nodes 110 - 125 is established in a step 310. In this, movement information on nodes 205 - 225 may be accounted for.

In an independent step 315, the moving status of the first node 105 may be determined. As described above with reference to Fig. 2, this may for instance be done on the basis of a signal on the interface 220.

In a step 320 it may be determined if any of the nodes 105 - 125 is moving. Depending on what information is present, the moving status of only the first node 105 (based on information from step 315), the moving status of one of the proximate nodes 105 - 125 in the first set 135 (on the basis of information collected in one of steps 305 or 310) may be used or it may be determined if any one of the known nodes 105 - 125 is moving.

Should the evaluated information indicate movement of the corresponding node 105 - 125, a time delay can be set to a small value in a step 330. In the negative, the delay value may be set to a high value in a step 325. After setting the delay value, method 300 may branch back to step 305 and start over. According to another embodiment, a parameter that is related to an effort used for establishing the first set 135 of proximate nodes 105 - 125 will be set to a high value in step 330 and a low value in step 325, assuming that an increased effort may yield improved performance.

Accordingly, steps 305, 310 and 320 - 325 will be carried out more or less often, depending on whether it was found if a node 105 - 125 is moving or not. These steps implement the discovery process that was mentioned earlier. The wireless interface 210 is less often and/or less intensely active if none of the nodes 105 - 125 is moving than if at least one of the nodes 105 - 125 is known to be moving. Thus, energy for operating the wireless interface 210 may be saved if no movement of the nodes 105 - 125 takes place.

Operation of the wireless communication means 210 for transmitting and receiving payload information between the nodes 105 - 125, especially routing information over intermediate nodes 105 - 125, is known in the art and will not be explained here in more detail.

However, method 300 may comprise more activity that is related to the movement of the first node 105. Following step 315, in which the moving status of the first node 105 was determined, it may be determined in a step 335 whether or not the moving status of the first node 105 has changed. If it has changed, that is, if the first node 105 was previously moving and does not move now or vice versa, the new moving status may be transmitted via the wireless communication means 210 in a step 340. Thus, a notification to all proximate nodes 110 - 125 may be sent out to permit them to react on the changed status.

When movement status of the first node 105 has not changed, movement status of the first node 105 may still be broadcast periodically. Intervals between the periodical missions may be adjusted according to the moving status. Should the first node 105 be found to be moving in a step 345, a delay may be set to a small value in a step 350. In the negative, if it is found that the first node 105 is standing still in step 345, the delay may be set to a larger value in a step 355. In both cases, transmission or broadcasting of the moving status in step 340 is performed, and then, after waiting in a step 360 the delay that was set in one of steps 350 or 355, this portion of method 300 may branch back to step 315.

### Reference List

- 100: mesh network
- 105: first node
- 110: second node
- 115: third node
- 120: fourth node
- 125: fifth node
- 125.1: fifth node at first time
- 125.2: fifth node at second time
- 125.3: fifth node at third time
- 130: trajectory
- 135: first set (nodes proximate to first node)
- 140: second set (nodes proximate to second node)
- 145: third set (nodes proximate to third node)

- 205: control unit
- 210: wireless communication means
- 215: antenna
- 220: interface
- 225: sensor
- 230: structure (device, vehicle)
- 235: battery

- 300: method
- 305: scan environment / request discovery / emit beacon
- 310: establish set of proximate nodes
- 315: determine own moving status
- 320: node moving
- 325: long delay / low effort
- 330: short delay / high effort

- 335: moving status changed
- 340: transmit moving status
- 345: moving
- 350: short delay
- 355: long delay
- 360: wait delay

## Claims

1. Method (300) for controlling a first node (105) comprised in a mesh network (100) of multiple nodes, the method (300) comprising steps of:
Gathering (305) by the first node (105) information on nodes (110, 115, 120, 125) that can be communicated with directly;
- establishing (310) by the first node (105), a set (135) of proximate nodes (110, 115, 125.2) in the mesh network (100) based on the gathered information;
- wherein between the first node (105) and a proximate node (110, 115, 125.2) direct communication is possible;
- collecting (305), by the first node (105), movement information concerning a movement of one of the proximate nodes (110, 115, 125.2),
- determining (315) by the first node (105) a moving status of the first node (105);
- determining (320) by the first node (105) if any of the nodes (105, 110, 115, 125.2) is moving;
- setting (325, 330) by the first node (105) a time delay based on the determination (320) of the movement of one of the nodes (105, 110, 115, 125.2) ;
- waiting, by the first node, the time delay that was set, branching back to the step of gathering (305) and again executing all the previous method steps (305, 310, 315, 320, 325, 330) by the first node (105).

2. Method (300) according to claim 1 wherein the time delay is set (325) to a high value, if the determination (320) indicates no movement of the nodes (105, 110, 115, 125.2), wherein the time delay is set (330) to a small value, if the determination (320) indicates a movement of at least one of the nodes (105, 110, 115, 125.2), and wherein a small value of the time delay is smaller than a high value of the time delay.

3. Method (300) according to claim 1 or 2 wherein the gathering (305) of information on nodes (110, 115, 120, 125) comprises scanning the environment by the first node and passively listening for wireless signals from other nodes (110, 115, 120 ,125).

4. Method (300) according to any of the preceding claims, wherein the gathering (305) of information on nodes (110, 115, 120, 125) comprises actively requesting by the first node (105) a response from the other nodes (110, 115, 120, 125).

5. Method (300) according to any of the preceding claims, wherein the gathering (305) of information on nodes (110, 115, 120, 125) comprises time controlled emission of a beacon signal.

6. Method (300) according to any of the previous claims, wherein the movement information concerning the first node (105) is broadcasted by the first node for reception by proximate nodes (110, 115, 125.2).

7. Method (300) according to claim 6, wherein the movement information is transmitted (340) when the movement status changes.

8. Method (300) according to any of the preceding claims, wherein the first node (105) forwards a message between nodes (110, 115, 125.2) that are proximate to it.

9. Computer program product comprising code means for carrying out a method (300) according to one of the above claims when the computer program product is run on a control unit (205) of a node (105 - 125).

10. Node (105,125) for participating in a mesh network (100), the node comprising
- communication means (210) for directly communicating with proximate nodes (110, 115, 125.2);
- a control unit (205) that is adapted to run a computer program according to claim 9.

11. Node (105,125) according to claim 10, wherein the node (105, 125) is adapted to be installed aboard a vehicle (230), the node further comprising an interface (220) for receiving a movement signal concerning the vehicle (230).

12. Node according to claim 10 or 11, further comprising a motion sensor (225).

13. Mesh network (100) of multiple nodes (105, 110, 115, 120, 125), the mesh network (100) comprising at least one node (105, 125) according to one of claims 10 to 12.

## Patentansprüche

1. Verfahren (300) zum Steuern eines ersten Knotens (105), der in einem Mesh-Netzwerk (100) aus mehreren Knoten enthalten ist, wobei das Verfahren (300) die Schritte umfasst:
Sammeln (305) von Informationen über Knoten (110, 115, 120, 125), mit denen direkt kommuniziert werden kann, durch den ersten Knoten (105);
- Feststellen (310) eines Satzes (135) von benachbarten Knoten (110, 115, 125.2) in dem Mesh-Netzwerk (100) durch den ersten Knoten (105) basierend auf den gesammelten Informationen;
- wobei zwischen dem ersten Knoten (105) und einem benachbarten Knoten (110, 115, 125.2) eine direkte Kommunikation möglich ist;
- Sammeln (305) von Bewegungsinformationen bezüglich einer Bewegung eines der benachbarten Knoten (110, 115, 125.2) durch den ersten Knoten (105),
- Bestimmen (315) eines Bewegungsstatus des ersten Knotens (105) durch den ersten Knoten (105);
- Bestimmen (320) durch den ersten Knoten (105), ob sich einer der Knoten (105, 110, 115, 125.2) bewegt;
- Einstellen (325, 330) einer Zeitverzögerung durch den ersten Knoten (105), basierend auf der Bestimmung (320) der Bewegung eines der Knoten (105, 110, 115, 125.2);
- Warten durch den ersten Knoten die eingestellte Zeitverzögerung, Zurückspringen zum Schritt des Sammelns (305) und erneutes Ausführen aller vorherigen Verfahrensschritte (305, 310, 315, 320, 325, 330) durch den ersten Knoten (105).

2. Verfahren (300) nach Anspruch 1, wobei die Zeitverzögerung auf einen hohen Wert eingestellt (325) wird, wenn die Bestimmung (320) keine Bewegung der Knoten (105, 110, 115, 125.2) anzeigt, wobei die Zeitverzögerung auf einen kleinen Wert eingestellt wird (330), wenn die Bestimmung (320) eine Bewegung von mindestens einem der Knoten (105, 110, 115, 125.2) anzeigt und wobei ein kleiner Wert der Zeitverzögerung kleiner ist als ein hoher Wert der Zeitverzögerung.

3. Verfahren (300) nach Anspruch 1 oder 2, wobei das Sammeln (305) von Informationen über Knoten (110, 115, 120, 125) das Scannen der Umgebung durch den ersten Knoten und das passive Hören auf drahtlose Signale von anderen Knoten (110, 115, 120, 125) umfasst.

4. Verfahren (300) nach einem der vorhergehenden Ansprüche, wobei das Sammeln (305) von Informationen über Knoten (110, 115, 120, 125) das aktive Anfordern einer Antwort von den anderen Knoten (110, 115, 120, 125) durch den ersten Knoten (105) umfasst.

5. Verfahren (300) nach einem der vorhergehenden Ansprüche, wobei das Sammeln (305) von Informationen über Knoten (110, 115, 120, 125) ein zeitgesteuertes Aussenden eines Beacon-Signals umfasst.

6. Verfahren (300) nach einem der vorhergehenden Ansprüche, wobei die den ersten Knoten (105) betreffenden Bewegungsinformationen vom ersten Knoten zum Empfang durch benachbarte Knoten (110, 115, 125.2) ausgestrahlt werden.

7. Verfahren (300) nach Anspruch 6, wobei die Bewegungsinformationen übertragen (340) werden, wenn sich der Bewegungsstatus ändert.

8. Verfahren (300) nach einem der vorhergehenden Ansprüche, wobei der erste Knoten (105) eine Nachricht zwischen Knoten (110, 115, 125.2) weiterleitet, die benachbart zu ihm sind.

9. Computerprogrammprodukt, umfassend Codemittel zum Ausführen eines Verfahrens (300) nach einem der vorhergehenden Ansprüche, wenn das Computerprogrammprodukt auf einer Steuereinheit (205) eines Knotens (105 - 125) ausgeführt wird.

10. Knoten (105, 125) zur Teilnahme an einem Mesh-Netzwerk (100), wobei der Knoten Folgendes umfasst
- Kommunikationsmittel (210) zum direkten Kommunizieren mit benachbarten Knoten (110, 115, 125.2);
- eine Steuereinheit (205), die angepasst ist, um ein Computerprogramm nach Anspruch 9 auszuführen.

11. Knoten (105, 125) nach Anspruch 10, wobei der Knoten (105, 125) angepasst ist, um an Bord eines Fahrzeugs (230) installiert zu werden, wobei der Knoten ferner eine Schnittstelle (220) zum Empfangen eines Bewegungssignals bezüglich des Fahrzeugs (230) umfasst.

12. Knoten nach Anspruch 10 oder 11, ferner umfassend einen Bewegungssensor (225).

13. Mesh-Netzwerk (100) aus mehreren Knoten (105, 110, 115, 120, 125), wobei das Mesh-Netzwerk (100) mindestens einen Knoten (105, 125) nach einem der Ansprüche 10 bis 12 umfasst.

## Revendications

1. Procédé (300) de commande d'un premier nœud (105) compris dans un réseau maillé (100) de plusieurs nœuds, le procédé (300) comprenant les étapes de :
collecte (305) par le premier nœud (105) d'informations sur les nœuds (110, 115, 120, 125) avec lesquels on peut communiquer directement ;
- établissement (310) par le premier nœud (105), d'un ensemble (135) de nœuds proches (110, 115, 125.2) dans le réseau maillé (100) sur la base des informations collectées ;
- dans lequel entre le premier nœud (105) et un nœud proche (110, 115, 125.2) une communication directe est possible ;
- collecte (305), par le premier nœud (105), d'informations de mouvement concernant un mouvement de l'un des nœuds proches (110, 115, 125.2),
- détermination (315) par le premier nœud (105) un état de mouvement du premier nœud (105) ;
- détermination (320) par le premier nœud (105) si l'un quelconque des nœuds (105, 110, 115, 125.2) est en mouvement ;
- définition (325, 330) par le premier nœud (105) d'une temporisation sur la base de la détermination (320) du mouvement de l'un des nœuds (105, 110, 115, 125.2) ;
- attente par le premier nœud, de la temporisation qui a été définie, retour à l'étape de collecte (305) et nouvelle exécution de toutes les étapes précédentes du procédé (305, 310, 315, 320, 325, 330) par le premier nœud (105).

2. Procédé (300) selon la revendication 1, dans lequel la temporisation est fixée (325) à une valeur élevée, si la détermination (320) n'indique aucun mouvement des nœuds (105, 110, 115, 125.2), dans lequel la temporisation est fixée (330) à une petite valeur, si la détermination (320) indique un mouvement d'au moins l'un des nœuds (105, 110, 115, 125.2), et une petite valeur de la temporisation étant inférieure à une valeur élevée de la temporisation.

3. Procédé (300) selon la revendication 1 ou 2, dans lequel la collecte (305) d'informations sur les nœuds (110, 115, 120, 125) comprend le balayage de l'environnement par le premier nœud et l'écoute passive des signaux sans fil provenant d'autres nœuds (110, 115, 120, 125).

4. Procédé (300) selon l'une quelconque des revendications précédentes, dans lequel la collecte (305) d'informations sur les nœuds (110, 115, 120, 125) comprend la demande active par le premier nœud (105) d'une réponse des autres nœuds (110, 115, 120, 125).

5. Procédé (300) selon l'une quelconque des revendications précédentes, dans lequel la collecte (305) d'informations sur les nœuds (110, 115, 120, 125) comprend l'émission commandée dans le temps d'un signal de balise.

6. Procédé (300) selon l'une quelconque des revendications précédentes, dans lequel les informations de mouvement concernant le premier nœud (105) sont diffusées par le premier nœud pour être reçues par des nœuds proches (110, 115, 125.2).

7. Procédé (300) selon la revendication 6, dans lequel les informations de mouvement sont transmises (340) lorsque l'état de mouvement change.

8. Procédé (300) selon l'une quelconque des revendications précédentes, dans lequel le premier nœud (105) transfère un message entre les nœuds (110, 115, 125.2) qui lui sont proches.

9. Produit-programme informatique comprenant des moyens de code pour exécuter un procédé (300) selon l'une des revendications ci-dessus lorsque le produit-programme informatique est exécuté sur une unité de commande (205) d'un nœud (105 - 125).

10. Nœud (105, 125) pour participer à un réseau maillé (100), le nœud comprenant
- un moyen de communication (210) pour communiquer directement avec des nœuds proches (110, 115, 125.2) ;
- une unité de commande (205) qui est conçue pour exécuter un programme informatique selon la revendication 9.

11. Nœud (105, 125) selon la revendication 10, dans lequel le nœud (105, 125) est conçu pour être installé à bord d'un véhicule (230), le nœud comprenant en outre une interface (220) pour recevoir un signal de mouvement concernant le véhicule (230).

12. Nœud selon la revendication 10 ou 11, comprenant en outre un capteur de mouvement (225).

13. Réseau maillé (100) à plusieurs nœuds (105, 110, 115, 120, 125), le réseau maillé (100) comprenant au moins un nœud (105, 125) selon l'une des revendications 10 à 12.
